# EUROPEAN PATENT APPLICATION

(11) **EP 2 286 888 A1**
(43) Date of publication of application: **23.02.2011**
(21) Application number: 09750428.6
(22) Date of filing: 31.03.2009
(51) Int. Cl.: B01D 29/39

(54) **FILTER RETAINER**

(30) Priority: 22.05.2008 JP 2008134268
(71) Applicant: Nagase & Co., Ltd., Osaka-shi Osaka 550-8668 (JP); Kabushiki Kaisha Toukai Spring Seisakusho, Aichi 456-0005 (JP)
(72) Inventor: KURIMOTO, Kenichi, Osaka-shi Osaka 550-8668 (JP); TAHARA, Yuya, Osaka-shi Osaka 550-8668 (JP); HIRAOKA, Yoshimichi, Kakamigahara-shi Gifu 509-0135 (JP); HORI, Shigehiro, Kakamigahara-shi Gifu 509-0135 (JP)
(74) Representative: Webster, Jeremy Mark
(86) International application number: PCT/JP2009/056633
(87) International publication number: WO 2009/142066

(57) **Abstract**

A filter retainer (1) supports filtering materials on both surfaces of the filter retainer. A pair of etched circular plates (3a, 3b) having a large number of circumferentially arranged through-holes (4) formed by chemical etching are joined to each other at a condition where the positions of corresponding through-holes (4) are aligned to coincide with each other, and at the joined form, radially extending internal paths (8) are formed between the pair of etched circular plates (3a, 3b). The structure of the filter retainer is totally novel and clears up various problems, such as accuracy and pressure loss, of conventional filter elements cause by internal structures thereof.

## Description

### Technical Field of the Invention

The present invention relates to a filter retainer provided for supporting filtering material in a filter element.

### Background Art of the Invention

For example, as a filter for filtering a polymer or a viscos fluid, a circular-plate type filter element is known. In such a filter element, a retainer comprising a wire netting and the like is frequently disposed in order to support a filtering material at a central position in the thickness direction of the filter element, and this structure is frequently constructed so that perforated plates (for example, punching metals) are disposed on both surfaces of the retainer and thereon filtering materials are provided, respectively, to form the filter element. For example, a plurality of such filter elements are stacked at a condition interposing spacers therebetween, a fluid to be filtered flowed into a portion between filter elements is filtered by being passed through the filtering materials, and thereafter, the filtered fluid reaches a retainer portion through the perforated plated, the fluid flows in the retainer portion in a radial direction (for example, in a direction toward the radially center portion) and is collected in a central portion, etc. of the stacked filter elements, and therefrom, the fluid is sent to a predetermined destination (for example, Patent document 1).
Patent document 1: Japanese patent 3,831,482

### Disclosure of the Invention

### Problems to be solved by the Invention

In a filter element having the above-described structure, although the retainer and the perforated plate are frequently manufactured by pressing, because there is a limit in dimensional accuracy in case of press forming, it may be difficult to manufacture in case where a strict dimensional tolerance is required. Further, in case of press forming, since change of design in dimension or shape cannot be easily carried out because the cost of a punch or a mold is high, the opening degree of the perforated plate or the form of the retainer cannot be changed easily.

Further, although it is desired that the resistance against the filtered fluid after passing through a filtering material is small as much as possible, because the fluid passes through the perforated plate, and further, through the retainer, usually it is difficult to greatly reduce the pressure loss. In case where a retainer is formed by a wire netting for example, because its surface is formed as a concave/convex configuration, in order to hold a sheet-like filtering material maintaining its predetermined shape (for example, maintaining a flat surface shape), a perforated plate is interposed between the retainer and the filtering material. However, in order to maintain a desired holding strength for the filtering material, there is a limit in thinning the perforated plate or increasing the opening degree of the perforated plate. Moreover, although the filtered fluid having been flowed into the retainer portion flows in a radial direction through both surface portions and the inside of the retainer, in case of a retainer made of a wire netting and the like, because the shape of the flow path becomes complicated and it is impossible to form it straight, there is a limit also in reduction of the pressure loss in the retainer and it becomes a structure which is likely to cause a stay in the retainer.

Further, in case of a retainer made of a wire netting and the like, because a holding strength for a filtering material is not expected so much to the retainer itself, the structure becomes so that most of the holding strength for a filtering material is to be loaded mainly by a perforated plate, and therefore, also from this point of view, there is a limit in thinning the perforated plate or increasing the opening degree of the perforated plate, and ultimately, there is a limit also in making the thickness of the entire filter element small. If the thickness of the entire filter element is great, only by that the stay time in the interior portion becomes long, and in case where a plurality of filter elements are stacked, the whole of the filter device inevitably becomes large-sized.

Furthermore, in order to flow the filtered fluid, flowed into the filter element through the filtering material, in a radial direction, any one of the outer circumferential side and the inner circumferential side of the filter element must be closed. For example, in case where, closing at the outer circumferential side, the filtered fluid is flowed toward the radially inner side, usually the filtering materials disposed on both surface sides are extended up to the outside part of the retainer and the perforated plate, and at that part, both filtering materials are bonded to each other by welding, etc. to close at the outer circumference side. However, at this part, because the outer circumferential ends of the retainer and the perforated plate form a stepped portion against the extended portion of the filtering material, the processing for closing the outer circumference part becomes a relatively difficult processing, and by this, there occurs a limit for improving a yield in production. Moreover, the presence of the above-described stepped portion at the outer circumferential side may also cause a fear of generation of an unnecessary stay portion in the filter element.

Paying attention to various problems ascribed to the internal structures of conventional general filter elements as described above, an object of the present invention is to clear up solve those problems by providing a filter retainer having a completely new structure.

### Means for solving the Problems

To achieve the above-described object, a filter retainer according to the present invention supports filtering materials on both surfaces, respectively, and is characterized in that a pair of etched circular plates each having a large number of circumferentially arranged through-holes formed by chemical etching are joined to each other at a condition where positions of corresponding respective through-holes are aligned to coincide with each other, and at a form being joined, radially extending internal paths are formed between the pair of etched circular plates.

In such a filter retainer according to the present invention, the fluid filtered by the filtering materials provided on both surfaces of the retainer flows into the retainer through the through-holes of the retainer, and therefrom, the fluid is collected to a central portion in the radial direction (as the case may be, possible to the outer circumferential portion in the radial direction) through the internal paths extending in the radial direction. Since these through-holes for forming a part of the flow path of the filtered fluid are formed by chemical etching, as compared with the conventional forming by pressing and the like, as long as a mask for etching is made at a high accuracy, it becomes possible to deal with a strict dimensional tolerance, and also it becomes possible to easily deal with change of design of the opening degree (namely, a rate of the area of the through-holes to the area of the entire plane of the retainer) or the shape of the entirety, etc.

Further, the internal paths extending in the radial direction between the pair of etched circular plates can be easily formed basically only by confronting the pair of etched circular plates and joining them to each other, and it is possible to form them as paths having relatively simple shapes, and therefore, as compared with retainers of wire nettings and the like, the internal pressure loss can be remarkably reduced, and a fear of occurrence of stay can be easily removed.

Further, because the etched circular plates are prepared basically by applying chemical etching to a raw material, it is possible to leave a formation of the raw material as it is for the portion other than the through-holes, etc., and as a whole, they can be formed as flat-plate like circular plates. Therefore, it becomes possible to ensure a desired strength by the retainer itself, it becomes possible to make perforated plates, provided in the conventional wire-netting retainer and the like, unnecessary, and a further reduction of pressure loss and thinning of the whole of a filter element become possible. By the thinning, it becomes possible to make the whole of a filter device small-sized in case where a plurality of filter elements are stacked. Further, by making the perforated plates unnecessary, it also becomes possible to decrease the number of possible staying places and shorten the staying time in the filter element.

Furthermore, the joined body with the pair of etched circular plates can be formed in a circular plate form as a whole, and perforated plates provided on both surfaces of a conventional retainer can be made unnecessary, and therefore, it becomes possible to provide filtering materials directly on both surfaces of the retainer according to the present invention. In addition, for example, if annular flat surface portions for joining with the filtering materials are formed on both surfaces at the outer circumferential portion of the retainer and the filtering materials are joined directly to those portions for closing, it is not necessary to employ a structure as in the conventional structures where the extended portions of the filtering materials are joined to each other at a position outside stepped portions of the outer circumferential portions of retainer and perforated plates, and therefore, simplification in structure and facilitation in manufacture can be both achieved. Further, a fear of occurrence of an unnecessary staying portion in a filter element ascribed to the presence of the above-described stepped portion at the outer circumference side may be also removed.

In such a filter retainer according to the present invention, as a more concrete formation, for example, a structure may be employed wherein the large number of through-holes formed by chemical etching are arranged in a circumferential direction and lines of the through-holes are disposed concentrically as a plurality of annular lines, and the pair of etched circular plates, in each of which annular regions extending concentrically are formed between the annular lines at a condition where a thickness of raw material is left by half etching, are joined to each other at a condition where half-etched surfaces are confronted with each other and positions of corresponding respective through-holes and respective annular regions are aligned to coincide with each other. In such a structure, the internal spaces formed by half-etched surfaces confronted to each other can be formed as the above-described internal paths, the internal paths can be formed only by a simple operation wherein the pair of etched circular plates are merely joined to each other at a predetermined form, and it becomes possible to easily form a desired retainer.

Further, a structure may also be employed wherein portions other than the above-described through-holes, on surfaces positioned opposite to surfaces of the pair of etched circular plates confronted with each other, are left as flat surfaces of raw materials before etching. Since it is possible to provide filtering materials on these flat surfaces without damaging the forms of the filtering materials themselves, a target filter element can be manufactured further easily.

Further, a structure may be employed wherein portions between the above-described half-etched surfaces confronted with each other form internal spaces which extend annularly and concentrically and communicate the through-holes in respective annular lines in a retainer radial direction. It is possible that these internal spaces function as the aforementioned internal paths.

In particular, if a structure is employed wherein portions between the half-etched surfaces confronted with each other form internal spaces which extend annularly and concentrically and communicate the through-holes in respective annular lines at a substantially straight condition in a retainer radial direction, it becomes possible to form internal paths each extending straightly in the radial direction, and therefore, the inside pressure loss may be further decreased.

It is preferred that the above-described pair of etched circular plates are joined to each other over the entire circumference at an outer circumference side or an inner circumference side. By this, a closing structure required in the radial direction for the retainer itself can be achieved. The joining may be achieved by welding, and it may be possible also by adhesion or fusion bonding.

Although the formation for supporting the filtering materials is not particularly limited, in the present invention, it is one of great characteristics it becomes possible to support the filtering materials directly on both surfaces of the retainer. However, in a special case such as a case where a same thickness as that in the conventional structure is required as the whole of a filter element and the like, a structure may be employed wherein the filtering materials are supported on both surfaces of the retainer via perforated plates.

Where, in case where the pair of etched circular plates are joined to each other, for example, at the outer circumferential side and filtering materials are provided on both surfaces of the retainer, basically, for example, a process is employed wherein a pair of etched circular plates are bonded by spot welding and the like and thereafter the filtering materials are stacked and the outer circumference is welded over the entire circumference, but for example, it is also possible to stack the filtering materials without bonding the pair of etched circular plates and weld the outer circumference.

Although the raw material for the above-described etched circular plates is not particularly restricted, typically, a stainless steel can be used from the viewpoint of corrosion proof, mechanical strength, thermal resistance, etc.

Further, the conditions for the chemical etching in the present invention is not particularly limited, as an example, the following conditions can be exemplified.
- kind of liquid for etching: solution of ferric chloride
- time: although deferent depending upon plate thickness and working method, averagely 3.5-4 hours are suitable.
- temperature: about 40-60°C
- kind of resist: DFR
- kind of developer: alkali-group release developer
- kind of release liquid: alkali-group release liquid

### Effect according to the Invention

Thus, in the filter retainer according to the present invention, the various problems ascribed to the internal structures of conventional general filter elements can be cleared up by providing a filter retainer having a new structure. More concretely, improvement of dimensional accuracy, facilitation of design and manufacture, simplification of internal structure, reduction of pressure loss, thinning, reduction of possible staying places and staying time, facilitation of closing processing, etc. become possible.

### Brief explanation of the drawings

[Fig. 1] Fig. 1 is a plan view of a filter retainer according an embodiment of the present invention.
[Fig. 2] Fig. 2 is a sectional view of the retainer depicted in Fig. 1.
[Fig. 3] Fig. 3 is a sectional view of a case where a filtering material is provided to the retainer depicted in Fig. 1.
[Fig. 4] Fig. 4 is a partial perspective view of the retainer depicted in Fig. 1.
[Fig. 5] Fig. 5 is a partial perspective view of a case where the retainer depicted in Fig. 1 is cut at a portion different from the cut portion of Fig. 4.

### Explanation of symbols

- 1:: filter retainer
- 2:: filtering material
- 3a, 3b:: etched circular plate
- 4:: through-hole
- 5:: half-etched annular region
- 6a, 6b:: half-etched surface
- 7:: outer circumferential portion
- 8:: internal path
- 9:: closed portion as viewed by a section

### The Best mode for carrying out the Invention

Hereinafter, desirable embodiments of the present invention will be explained referring to figures.

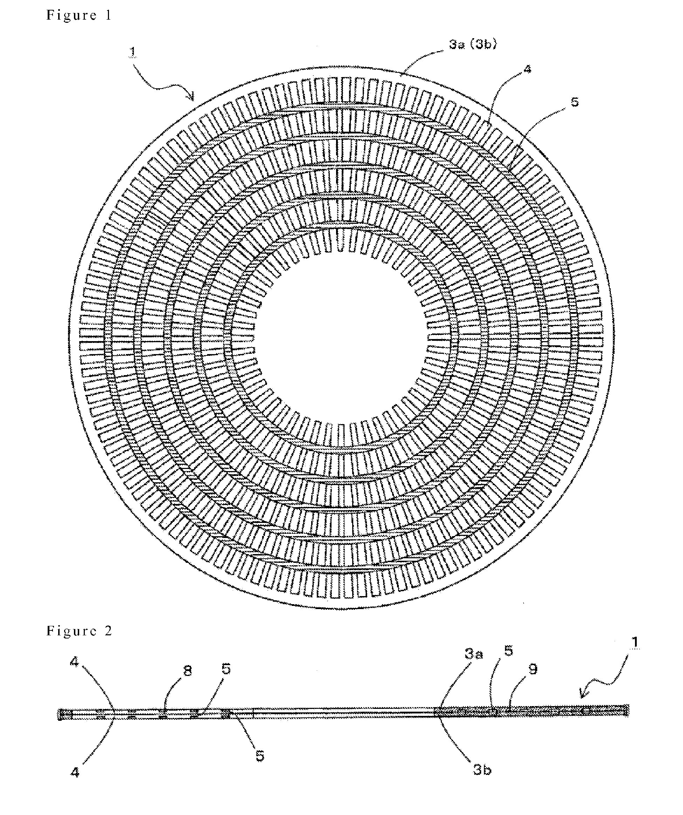

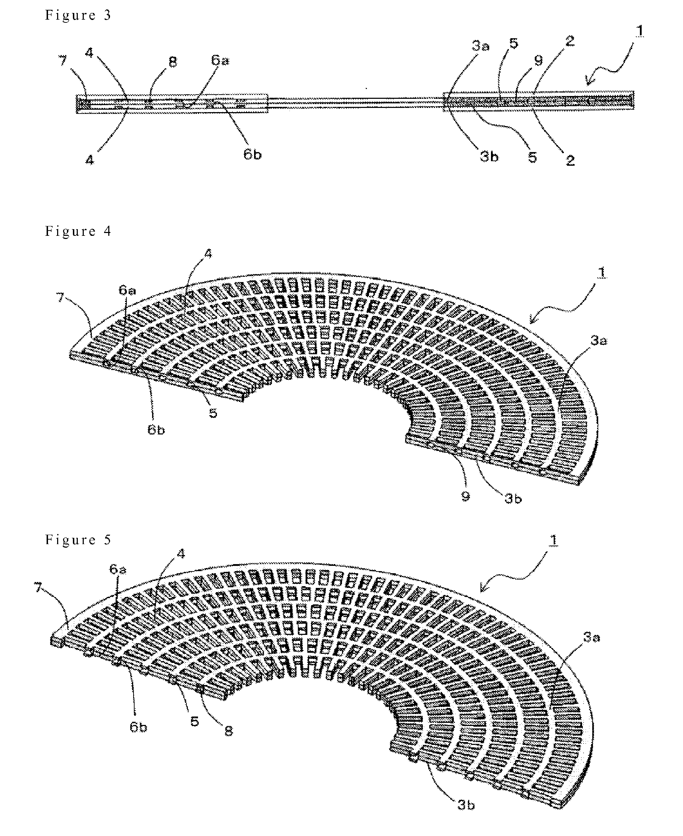

Figs. 1-5 show a filter retainer 1 according to an embodiment of the present invention, and in this embodiment, as shown in Fig. 3, filtering materials 2 are supported directly on both surfaces of the retainer 1, respectively. Retainer 1 comprises a body joined with a pair of etched circular plates 3a, 3b, and in each of etched circular plates 3a, 3b, a large number of through-holes 4 are formed by chemical etching. A large number of through-holes 4 are arranged in the circumferential direction and the lines of through-holes 4 are disposed concentrically as a plurality of annular lines. Between the annular lines, annular regions 5 extending concentrically are formed at a condition where a thickness of a raw material is left by half etching. The pair of etched circular plates 3a, 3b are joined to each other at a condition where the above-described half-etched surfaces 6a, 6b (annular regions 5) are confronted with each other and the positions of corresponding through-holes 4 and annular regions 5 are aligned to coincide with each other. In this embodiment, the joining is carried out by entire circumferential welding at an outer circumferential portion 7, and at this portion, leakage of internal fluid in a radially outward direction is prevented.

Portions other than through-holes 4, on the surfaces positioned opposite to the surfaces of the pair of etched circular plates 3a, 3b confronted with each other, are left as flat surfaces of raw materials before etching (for example, as flat surfaces of raw materials of stainless steel). On the flat surfaces, filtering materials 2 are provided as shown in Fig. 3.

The portions between half-etched surfaces 6a, 6b confronted with each other are formed as internal spaces which extend annularly and concentrically and communicate through-holes 4 in respective annular lines in the retainer radial direction, and these internal spaces form internal paths 8 which flow the filtered fluid, flowed into the retainer through through-holes 4, in the radial direction. These internal paths 8 preferably extend straightly in the radial direction in most area of the retainer. Namely, in most area of the retainer, through-holes 4 adjacent to each other in the radial direction are communicated with each other by the internal paths 8 extending straightly. In the portions which do not communicate through-holes 4 with each other in the radial direction, they are formed as closed portions 9 as viewed by a section, and the internal spaces due to annular regions 5 merely extend in the circumferential direction.

In the above-described filter retainer 1, the fluid filtered by filtering materials 2 flows into retainer 1 through through-holes 4 of retainer 1, and therefrom, the fluid is collected to the radially central portion through internal paths 8 extending in the radial direction. Since through-holes 4 and half-etched surfaces 6a, 6b (portions of annular regions 5) forming internal paths 8 are both formed by chemical etching, it is possible to form them extremely accurately, and by changing a mask for etching, even change of design of the opening degree of through-holes 4, the arrangement of through-holes 4, the shape of through-holes 4, etc. can be easily dealt. Namely, a substantially free design is possible.

Further, internal paths 8 formed between the pair of etched circular plates 3a, 3b can be easily formed merely by joining the etched circular plates 3a, 3b to each other at a condition being confronted with each other at a predetermined condition. Further, because internal paths 8 are formed as paths with simple shapes, in particular, because they can be formed as straight paths, inside pressure loss can be reduced, and a fear of staying can be easily removed.

Further, by adequately setting the opening degree due to through-holes 4 or by leaving the portions other than through-holes 4 as the flat surfaces of raw material, it becomes possible to easily ensure a desired strength by retainer 1 itself, and it becomes possible to make the conventional perforated plates unnecessary, to further reduce the pressure loss and to make the whole of a filter element thin. By such a thinning, in case where a plurality of the filter elements are stacked, the whole of the filter device can be made small-sized. Further, by making the perforated plates unnecessary, decrease of the number of possible staying places and shortening of the staying time in the filter element may be possible.

Furthermore, by making the conventional perforated plates unnecessary, a stepped portion at the outer circumferential portion disappears, and because it is possible to join the outer circumferential portions of filtering materials 2 directly to the outer circumferential portions on both surfaces of retainer 1, the closing structure at this part can be greatly simplified, and the manufacture can be facilitated. Further, it is possible to remove a fear of occurrence of an unnecessary staying portion in a filter element which may be cause by the presence of a stepped portion at the outer circumferential portion as in the conventional structure.

### Industrial Applications of the Invention

The filter retainer according to the present invention can be applied to any filter element, and in particular, it is suitable for a so-called leaf-disc type filter element.

## Claims

1. A filter retainer supporting filtering materials on both surfaces, respectively, **characterized in that** a pair of etched circular plates each having a large number of circumferentially arranged through-holes formed by chemical etching are joined to each other at a condition where positions of corresponding respective through-holes are aligned to coincide with each other, and at a form being joined, radially extending internal paths are formed between said pair of etched circular plates.

2. The filter retainer according to claim 1, wherein said large number of through-holes formed by chemical etching are arranged in a circumferential direction and lines of said through-holes are disposed concentrically as a plurality of annular lines, and said pair of etched circular plates, in each of which annular regions extending concentrically are formed between said annular lines at a condition where a thickness of raw material is left by half etching, are joined to each other at a condition where half-etched surfaces are confronted with each other and positions of corresponding respective through-holes and respective annular regions are aligned to coincide with each other.

3. The filter retainer according to claim 1, wherein portions other than said through-holes, on surfaces positioned opposite to surfaces of said pair of etched circular plates confronted with each other, are left as flat surfaces of raw materials before etching.

4. The filter retainer according to claim 2, wherein portions between said half-etched surfaces confronted with each other form internal spaces which extend annularly and concentrically and communicate said through-holes in respective annular lines in a retainer radial direction.

5. The filter retainer according to claim 4, wherein portions between said half-etched surfaces confronted with each other form internal spaces which extend annularly and concentrically and communicate said through-holes in respective annular lines at a substantially straight condition in a retainer radial direction.

6. The filter retainer according to claim 1, wherein said pair of etched circular plates are joined to each other over the entire circumference at an outer circumference side or an inner circumference side.

7. The filter retainer according to claim 1, wherein said filtering materials are supported directly on said both surfaces.

8. The filter retainer according to claim 1, wherein said filtering materials are supported on said both surfaces via perforated plates.

9. The filter retainer according to claim 1, wherein a raw material of said etched circular plates is a stainless steel.

10. The filter retainer according to claim 1, wherein a solution of ferric chloride is used as a liquid for etching for said chemical etching.
